# EUROPEAN PATENT APPLICATION

(11) **EP 4 394 996 A1**
(43) Date of publication of application: **03.07.2024**
(21) Application number: 22941207.7
(22) Date of filing: 13.05.2022
(51) Int. Cl.: H01M 10/0587, H01M 10/058

(54) **ELECTRODE ASSEMBLY, BATTERY CELL, BATTERY AND ELECTRICAL DEVICE**

(71) Applicant: Contemporary Amperex Technology Co., Limited, Ningde City, Fujian 352100 (CN)
(72) Inventor: TANG, Huaichao, Ningde, Fujian 352100 (CN); PENG, Longqing, Ningde, Fujian 352100 (CN); LI, Ting, Ningde, Fujian 352100 (CN)
(74) Representative: Gong, Jinping
(86) International application number: PCT/CN2022/092829
(87) International publication number: WO 2023/216255

(57) **Abstract**

The embodiments of the present disclosure provide an electrode assembly, a battery cell, a battery, and an electrical equipment, which belongs to the battery technology field. The electrode assembly includes a first separator and a first electrode plate and a second electrode plate with opposite polarity. The first electrode plate, second electrode plate, and first separator are wound along the winding direction to form the electrode assembly with a first through hole. The first separator includes a first extension section extending into the first through hole; and the electrode assembly further includes a reinforcer, wherein the reinforcer is at least partially connected to the first extension section. The reinforcer plays a strengthening role in the first extension section, thereby improving the deformation resistance of the first extension section, and making the first extension section play a good supporting role in the first through hole. Therefore, the electrode assembly is not easy to collapse into the first through hole, so as to reduce the risk that the electrode plate punctures the separator due to the collapse of electrode assembly towards the first through hole to lead to a short circuit inside the electrode assembly, thereby improving the safety of battery cell.

## Description

### Technical Field

The present disclosure relates to the field of battery technology, in particular to an electrode assembly, a battery cell, a battery, and an electrical equipment.

### Background Art

With the development of new energy technology, batteries are more and more widely used, such as mobile phones, laptops, battery cars, electric vehicles, electric aircraft, electric boats, electric toy cars, electric toy boats, electric toy planes and electric tools.

In battery technology, it is necessary to consider both the performance of battery cells and the safety of battery cells. Therefore, how to improve the safety of battery cells is an urgent problem to be solved in battery technology.

### Summary

The embodiments of the present disclosure provide an electrode assembly, a battery cell, a battery, and an electrical equipment, which can effectively improve the safety of the battery cell.

In the first aspect, the embodiment of the present disclosure provides an electrode assembly, including a first separator and a first electrode plate and a second electrode plate with opposite polarity, wherein the first electrode plate, second electrode plate, and first separator are wound along the winding direction to form the electrode assembly with a first through hole, wherein the first separator includes a first extension section extending into the first through hole; and the electrode assembly further includes a reinforcer, wherein the reinforcer is at least partially connected to the first extension section.

In the above technical solution, the first extension section of the first separator extends into the first through hole, and the reinforcer is at least partially connected to the first extension section, such that the reinforcer plays a strengthening role in the first extension section, thereby improving the deformation resistance of the first extension section, and making the first extension section play a good supporting role in the first through hole. Therefore, the electrode assembly is not easy to collapse into the first through hole, so as to reduce the risk that the electrode plate punctures the separator due to the collapse of electrode assembly towards the first through hole to lead to a short circuit inside the electrode assembly, thereby improving the safety of battery cell.

In some embodiments, the first separator further includes a first winding section, wherein the first winding section is connected to the first extension section; the first winding section extends in the winding direction from a connection position with the first extension section, so as to define the first through hole; and the first extension section bends inwardly relative to the first winding section and extends from the connection position towards the interior of the first through hole, wherein the reinforcer is at least partially connected to the first winding section.

In the above technical solution, the reinforcing part is at least partially connected to the first winding section, such that the reinforcing part plays a reinforcing role in the first winding section, thereby achieving reinforcement for the hole wall of the first through hole and further reducing the risk of electrode assembly collapsing into the first through hole.

In some embodiments, the reinforcer includes a first reinforcing part and a second reinforcing part, wherein the first reinforcing part is connected to the first extension section, and the first reinforcing part extends along the extension direction of the first extension section; and the second reinforcing part is connected to the inner surface of the first winding section, and the second reinforcing part is connected to the first reinforcing part and extends along the winding direction.

In the above technical solution, the first reinforcing part is connected to the first extension section and extends along the extension direction of the first extension section, such that the first reinforcing part plays a reinforcing role in the first extension section, so as to enhance the support capacity of the first extension section. The second reinforcing part is connected to the inner surface of the first winding section and extends along the winding direction, such that the second reinforcing part plays a reinforcing role in the first winding section, so as to achieve reinforcement for the hole wall of the first through hole.

In some embodiments, the electrode assembly further includes a second separator, wherein the first separator, the first electrode plate, the second separator, and the second electrode plate are wound along the winding direction to form the electrode assembly with the first through hole, wherein the second separator includes a second extension section, the second extension section extends towards the interior of the first through hole and is stacked with the first extension section, and the first reinforcing part is connected to the surface of the first extension section facing away from the second extension section; and the reinforcer further includes a third reinforcing part, wherein the third reinforcing part is connected to the surface of the second extension section facing away from the first extension section, and the third reinforcing part extends along the extension direction of the second extension section.

In the above technical solution, the second extension section extends towards the interior of the first through hole and is stacked with the first extension section, so as to make the first extension section and the second extension section thicker overall. The third and first reinforcing parts respectively strengthen the first and second extension sections, thereby enhancing the overall support capacity of the first and second extension sections and further reducing the risk of electrode assembly collapsing into the first through hole.

In some embodiments, the first reinforcing part completely covers the surface of the first extension section facing away from the second extension section; and/or the third reinforcing part completely covers the surface of the second extension section facing away from the first extension section.

In the above technical solution, the first reinforcing part completely covers the surface of the first extension section facing away from the second extension section, so as to increase the area of the first reinforcing part covering the first extension section and further enhance the deformation resistance of the first extension section. The third reinforcing part completely covers the surface of the second extension section facing away from the first extension section, so as to increase the area of the third reinforcing part covering the second extension section and further enhance the deformation resistance of the second extension section.

In some embodiments, along the winding direction, the third reinforcing part and the first reinforcing part are respectively connected at two ends of the second reinforcing part.

In the above technical solution, the third reinforcing part and the first reinforcing part are respectively connected to the two ends of the second reinforcing part in the winding direction. On the one hand, the second reinforcing part and the first winding section can have a larger overlapping region, and the second reinforcing part can strengthen the entire circumference of the hole wall of the first through hole. On the other hand, the first reinforcing part, the second reinforcing part, and the third reinforcing part have good integrity and can better strengthen the first extension section, the first winding section, and the second extension section.

In some embodiments, the first through hole includes a first half-hole region and a second half-hole region separated from each other, wherein the first reinforcing part and the second reinforcing part are located in the first half-hole region, and the third reinforcing part is located in the second half-hole region.

In the above technical solution, the first reinforcing part and the second reinforcing part are located within the first half-hole region, such that the first and second reinforcing parts play a strengthening role in the first half-hole region, thereby reducing the risk of electrode assembly collapsing towards the first half-hole region. The third reinforcing part is located in the second half-hole region, and plays a strengthening role in the second half-hole region, thereby reducing the risk of electrode assembly collapsing towards the second half-hole region.

In some embodiments, the first reinforcing part and the second reinforcing part are connected end-to-end to form a first closed unit, wherein the first closed unit is located within the first half-hole region.

In the above technical solution, the first reinforcing part and the second reinforcing part are connected end-to-end to form a first closed unit. The first closed unit is of a hollow structure with good deformation resistance, thereby providing good support for the hole wall of the first half-hole region, and effectively reducing the risk of electrode assembly collapsing into the first half-hole region.

In some embodiments, the first extension section extends to the inner surface of the first winding section, and the first extension section and the first winding section jointly define the first half-hole region.

In the above technical solution, the first extension section extends to the inner surface of the first winding section, thereby making the first extension section more stable in the first through hole and providing better support for the first through hole.

In some embodiments, the reinforcer further includes a fourth reinforcing part, wherein the fourth reinforcing part is connected to the inner surface of the first winding section and extends along the winding direction, and the third reinforcing part and the fourth reinforcing part are connected end-to-end to form a second closed unit, wherein the second closed unit is located in the second half-hole region.

In the above technical solution, the third reinforcing part and the fourth reinforcing part are connected end-to-end to form the second closed unit. The second closed unit is of a hollow structure with good deformation resistance, thereby providing good support for the hole wall of the second half-hole region and effectively reducing the risk of electrode assembly collapsing towards the second half-hole region.

In some embodiments, the second extension section extends to the inner surface of the first winding section, and the second extension section and the first winding section jointly define the second half-hole region.

In the above technical solution, the second extension section extends to the inner surface of the first winding section, thereby making the second extension section more stable in the first through hole and providing better support for the first through hole.

In some embodiments, the second separator further includes a second winding section, wherein the second winding section bends relative to the second extension section; the second winding section extends along the winding direction from the second extension section; the second winding section is located on the inner side of the first winding section and stacked with the first winding section; and the second extension section and the second winding section jointly define the second half-hole region.

In the above technical solution, the second separator has a second winding section stacked with the first winding section. The second winding section and the second extension section jointly define the second half-hole region. The second closed unit located within the second half-hole region strengthens the second winding section to achieve stable support for the first winding section, thereby reducing the risk of electrode assembly collapsing into the first through hole.

In some embodiments, the first separator further includes a third winding section, wherein the third winding section is connected to one end of the first extension section facing away from the first winding section, and the third winding section extends in the winding direction from the first extension section, wherein the first winding section, the third winding section, and the second winding section are stacked in sequence from the outside to the inside.

In the above technical solution, the first winding section, the third winding section, and the second winding section are sequentially stacked from the outside to the inside, such that the third winding section is limited between the first winding section and the second winding section, thereby improving the stability of the first extension section.

In some embodiments, the first reinforcing part and the second reinforcing part are connected end-to-end to form a first closed unit.

In the above technical solution, the first reinforcing part and the second reinforcing part are connected end-to-end to form a first closed unit. The first closed unit is of a hollow structure with good deformation resistance, thereby providing good support for the hole wall of the first half-hole region, and effectively reducing the risk of electrode assembly collapsing into the first half-hole region.

In some embodiments, the first extension section extends to the inner surface of the first winding section, and the first extension section and the first winding section jointly define the first half-hole region, wherein the first closed unit is located in the first half-hole region.

In the above technical solution, the first extension section extends to the inner surface of the first winding section, thereby making the first extension section more stable in the first through hole and providing better support for the first through hole.

In some embodiments, the electrode assembly has a main body part and a tab part, wherein the tab part is provided on at least one end of the main body part; the first through hole is formed inside the main body part; the second through hole is formed inside the tab part; and the second through hole is communicated with the first through hole, wherein the reinforcer partially extends into the first through hole and is connected to the tab part.

In the above technical solution, the reinforcer extends into the first through hole and is connected to the tab part, such that the reinforcer can be fixed to tab, which further strengthens the separator in the first through hole region, and makes it more difficult for the separator to move. Therefore, the risk of excessive spacing between the first electrode plate and the second electrode plate due to the movement of the separator with the reinforcer can be reduced effectively, thereby effectively improving the safety of the battery cell.

In some embodiments, the thickness of the reinforcer is 0.01-1000 µM.

In some embodiments, the thickness of the reinforcer is 0.1-300 µM.

In some embodiments, the porosity of the reinforcer is not greater than 10%.

In some embodiments, the reinforcer is made of insulating material.

In some embodiments, the reinforcer is an inorganic reinforcer or a composite reinforcer containing inorganic material.

In the second aspect, the embodiment of the present disclosure provides a battery cell, including a shell and the electrode assembly provided by any one of the embodiments of the aforementioned first aspect, wherein the electrode assembly is accommodated in the shell.

In the third aspect, the embodiment of the present disclosure provides a battery, including a box and the battery cell provided by any one of the embodiments of the second aspect mentioned above, wherein the battery cell is accommodated in the box.

In the fourth aspect, the embodiment of the present disclosure provides an electrical equipment, including the battery provided by any one of the embodiments of the third aspect mentioned above.

### Brief Description of Drawings

In order to more clearly illustrate technical solutions of embodiments of the present disclosure, drawings required for use in the embodiments will be described briefly below. It should be understood that the following drawings are merely illustrative of some embodiments of the present disclosure, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present disclosure;
FIG. 2 is an exploded view of the battery provided in some embodiments of the present disclosure;
FIG. 3 is an exploded view of the battery cell provided in some embodiments of the present disclosure;
FIG. 4 is a structural schematic diagram of the electrode assembly provided in some embodiments of the present disclosure;
FIG. 5 is a partial enlarged view of the electrode assembly shown in FIG. 4;
FIG. 6 is a partial enlarged view of the electrode assembly provided in some other embodiments of the present disclosure;
FIG. 7 is a partial enlarged view of the electrode assembly provided in some other embodiments of the present disclosure;
FIG. 8 is a partial enlarged view of the electrode assembly provided in some other embodiments of the present disclosure;
FIG. 9 is an axonometric drawing of the electrode assembly provided in some embodiments of the present disclosure;

Reference signs: 1-electrode assembly; 11-main body part; 111-first through hole; 1111-first half-hole region; 1112-second half-hole region; 12-tab part; 121-second through hole; 13-first separator; 131-first extension section; 132-first winding section; 133-third winding section; 14-first electrode plate; 15-second electrode plate; 16-second separator; 161-second extension section; 162-second winding section; 17-reinforcer; 17a-first closed unit; 17b-second closed unit; 171-first reinforcing part; 172-second reinforcing part; 173-third reinforcing part; 174-fourth reinforcing part; 2-shell; 21-casing; 22-end cover; 3-electrode terminal; 4-current collector component; 10-battery cell; 20-box; 201-first part; 202-second part; 100-battery; 200-controller; 300-motor; 1000-vehicle; and X-winding direction.

### Detailed Description of Embodiments

In order to make the objectives, technical solutions and advantages of the embodiments of the present disclosure clearer, the technical solutions in the embodiments of the present disclosure will be described clearly below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions. The terms "first", "second", etc. in the description and the claims of the present disclosure or the drawings are used to distinguish different objects, rather than describing specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment.

In the description of the present disclosure, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present disclosure may be understood according to specific circumstances.

The term "and/or" in the present disclosure is only a description for the association relationship of the associated object, indicating that there can be three types of relationships. For example, A and/or B can indicate three conditions: the presence of only A, the presence of both A and B, and the presence of only B. In addition, the character "/" in the present disclosure generally indicates that the associated objects before and after have an "or" relationship.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The term "multiple (a plurality of)" in the present disclosure refers to two or more (including two).

In the present disclosure, the battery cell can include a lithium ion secondary battery, a lithium ion primary battery, a lithium sulfur battery, a sodium lithium ion battery, a sodium ion battery or a magnesium ion battery, etc., which is not limited by the embodiments of the present disclosure. The battery cell can be cylindrical, flat, or rectangular, or be of other shapes, which is also not limited by the embodiments of the present disclosure. Battery cells are generally divided into three types according to the packaging method: cylindrical battery cell, square battery cell, and soft pack battery cell, which is also not limited by the embodiments of the present disclosure.

The battery mentioned in the embodiments of the present disclosure refers to a single physical module that includes one or more battery cells to provide higher voltage and capacity. For example, the batteries mentioned in the present disclosure may include battery modules or battery packs, etc. The battery generally includes a box used to encapsulate one or more battery cells. The box can prevent liquids or other foreign objects from affecting the charging or discharging of battery cells.

The battery cell includes an electrode assembly and an electrolyte, and the electrode assembly is composed of a positive electrode plate, a negative electrode plate, and a separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector, and the positive electrode current collector without the positive electrode active substance layer protrudes from the positive electrode current collector coated by the positive electrode active substance layer. The positive electrode current collector without the positive electrode active substance layer is used as the positive electrode tab. Taking lithium ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector, and the negative electrode current collector without the negative electrode active substance layer protrudes from the negative electrode current collector coated by the negative electrode active substance layer. The negative electrode current collector without the negative electrode active substance layer is used as the negative electrode tab. The material for the negative electrode current collector can be copper, and the active substance of the negative electrode can be carbon, silicon or the like. In order to ensure that fusing does not occur under a high current, multiple positive electrode tabs are provided and stacked together, and multiple negative electrode tabs are provided and stacked together. The material of the separator can be PP (polypropylene) or PE (polyethylene), etc. In addition, the electrode assembly can be of a wound structure or a laminated structure (stacked structure), which is not limited by the embodiments of the present disclosure.

The development of battery technology needs to consider multiple design factors simultaneously, such as energy density, cycle life, discharge capacity, charging and discharging rate, and other performance parameters. In addition, it is also necessary to consider the safety of the battery.

The inventor noticed that for ordinary battery cells, accidents such as battery cell explosions and fires may occur due to short circuits inside the battery cell.

The inventor found that for wound electrode assemblies, a through hole will be formed in the central area of the electrode assembly. During the charging process of the battery cell, the expansion of the negative electrode material makes the electrode assembly expand. The outward expansion of the electrode assembly will be hindered by the shell of the battery cell, and the electrode assembly will expand towards the through hole. Over time, the continuous charging process makes this situation aggravated, and the electrode assembly will expand towards the through hole continuously. Finally, the electrode assembly will collapse into the through hole. The collapse of the electrode assembly increases the risk of the electrode plate piercing the separator during the expansion and contraction processes between the charging and non-charging states, which leads to the short circuits in the electrode assembly and safety accidents.

In view of the above, the embodiment of the present disclosure provides an electrode assembly, including a first separator and a first electrode plate and a second electrode plate with opposite polarity. The first electrode plate, second electrode plate, and first separator are wound along the winding direction to form the electrode assembly with a first through hole. The first separator includes a first extension section extending into the first through hole; and the electrode assembly further includes a reinforcer, wherein the reinforcer is at least partially connected to the first extension section.

In such electrode assembly, the first extension section of the first separator extends into the first through hole, and the reinforcer is at least partially connected to the first extension section, such that the reinforcer plays a strengthening role in the first extension section, thereby improving the deformation resistance of the first extension section, and making the first extension section play a good supporting role in the first through hole. Therefore, the electrode assembly is not easy to collapse into the first through hole, so as to reduce the risk that the electrode plate punctures the separator due to the collapse of electrode assembly towards the first through hole to lead to a short circuit inside the electrode assembly, thereby improving the safety of battery cell.

The electrode assembly described in the embodiments of the present disclosure is applicable to battery cells, batteries and electrical equipment using batteries.

The electrical equipment can be a vehicle, a mobile phone, a portable device, a notebook computer, a ship, a spacecraft, an electric toy, an electric tool, and the like. The vehicle can be a fuel vehicle, a gas vehicle, or a new energy vehicle. The new energy vehicle can be a pure electric vehicle, a hybrid electric vehicle, a range extended vehicle, or the like. The spacecraft includes an aircraft, a rocket, a space shuttle, a spacecraft, and the like. The electric toys include a stationary or mobile electric toy, such as a game console, an electric vehicle toy, an electric ship toy, an electric airplane toy, and the like. The electric tools include a metal cutting electric tool, a grinding electric tool, an assembly electric tool, and an electric tool for railways, such as an electric drill, an electric grinder, an electric wrench, an electric screwdriver, an electric hammer, an electric impact drill, a concrete vibrator, and an electric planer. The foregoing electrical equipment is not specially limited in the embodiment of the present disclosure.

For ease of description, the following embodiments will be described by taking an electrical equipment being a vehicle as an example.

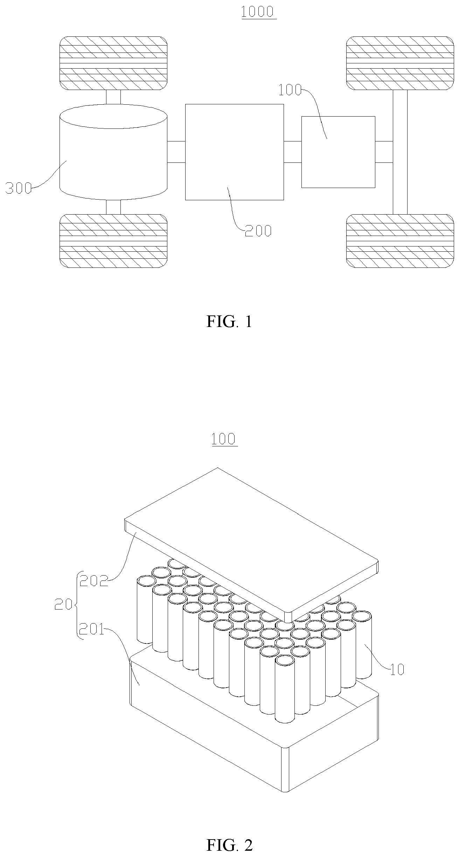

Referring to FIG. 1, FIG. 1 is a structural schematic view of the vehicle 1000 provided in some embodiments of the present disclosure. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000.

The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an explosion view of the battery 100 provided in some embodiments of the present disclosure. The battery 100 includes a battery cell 10 and a box 20, which is used to accommodate the battery cell 10.

In the above, the box 20 is a component that accommodates the battery cell 10, and the box 20 provides an accommodating space for the battery cell 10. The box 20 can be of various structures. In some embodiments, the box 20 may include a first part 201 and a second part 202, with the first part 201 and the second part 202 covering each other, so as to define an accommodating space for accommodating the battery cell 10. The first part 201 and the second part 202 can be of various shapes, such as cuboid, cylinder, etc. The first part 201 can be of a hollow structure with one side opened, and the second part 202 can also be of a hollow structure with one side opened. The opened side of the second part 202 covers the opened side of the first part 201, so as to form a box 20 with accommodating space. It can also be that the first part 201 is of a hollow structure with one side opened, the second part 202 is of a plate-like structure, and the second part 202 covers the opened side of the first part 201, so as to form a box 20 with accommodating space. The first part 201 and the second part 202 can be sealed through sealing elements, which can be sealing rings, sealants, etc.

In battery 100, one or multiple battery cells 10 can be provided. If multiple battery cells 10 are provided, the multiple battery cells 10 can be connected in series, parallel, or hybrid. Hybrid connection means that both series connection and parallel connection exist among multiple battery cells 10. It is possible that multiple battery cells 10 are first connected in series, parallel, or hybrid to form a battery module, and multiple battery modules are then connected in series, parallel, or hybrid to form a whole to be accommodated in the box 20. Alternatively, all battery cells 10 can be directly connected in series, parallel, or hybrid together, and then the entire body composed of all battery cells 10 can be accommodated in the box 20.

In some embodiments, battery 100 may also include a busbar component, and multiple battery cells 10 may be electrically connected through the busbar component, so as to achieve series, parallel, or hybrid connection of multiple battery cells 10. The busbar component can be metal conductors, such as copper, iron, aluminum, stainless steel, and aluminum alloy.

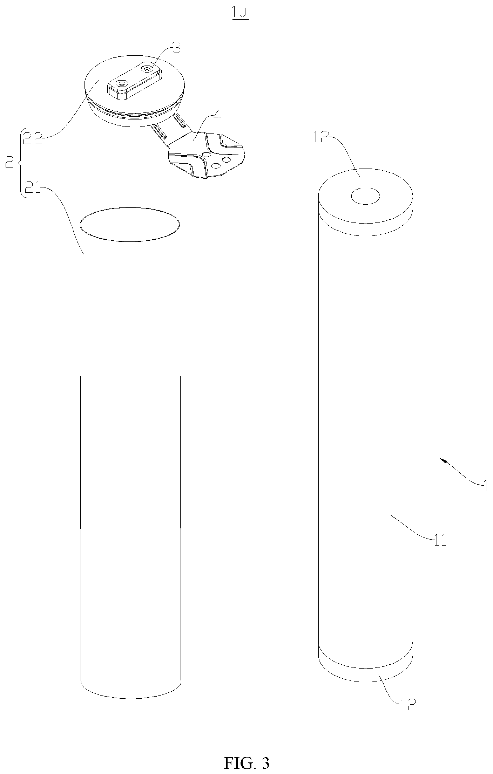

Referring to FIG. 3, FIG. 3 is an explosion view of the battery cell 10 provided in some embodiments of the present disclosure.The battery cell 10 includes an electrode assembly 1 and a shell 2.

A closed space is formed inside the shell 2 to accommodate the electrolyte of the electrode assembly 1. The shell 2 can include a casing 21 and an end cover 22. The casing 21 has an opening. The end cover 22 covers the opening of the casing 21, and the end cover 22 and the casing 21 jointly define the closed space.

The casing 21 can be of a hollow structure with one end forming an opening, and the casing 21 can also be of a hollow structure with two opposite ends forming openings. The casing 21 can be of various shapes, such as cylinder, cuboid, etc. The material of casing 21 can be various, such as copper, iron, aluminum, steel, aluminum alloy, etc.

The end cover 22 is a component that covers the opening of the casing 21 to isolate the internal environment of the battery cell 10 from the external environment. The shape of the end cover 22 can match the shape of the casing 21. For example, the casing 21 is of a cuboid structure, and the end cover 22 is of a rectangular plate-like structure matching the casing 21. For another example, the casing 21 is of a cylindrical structure, and the end cover 22 is of a circular plate-like structure matching the casing 21. The material of end cover 22 can also be various, such as copper, iron, aluminum, steel, aluminum alloy, etc.

In shell 2, one or two end covers 22 can be provided. In the embodiment where the casing 21 is of a hollow structure with openings formed at both ends, two end covers 22 can be provided correspondingly, and the two end covers 22 each cover the two openings of the casing 21. The two end covers 22 and the casing 21 jointly define a sealed space. As shown in FIG. 3, in an embodiment where the casing 21 is of a hollow structure with an opening formed at one end, one end cover 22 can be correspondingly provided, which covers the opening at one end of the casing 21. The one end cover 22 and the casing 21 jointly define a sealed space, and the end of casing 21 opposite to the end cover 22 is the bottom wall of casing 21.

The electrode assembly 1 is a component in the battery cell 10 that undergoes electrochemical reactions. The electrode assembly 1 can include a positive electrode plate, a negative electrode plate, and a separator, and the electrode assembly 1 can be in a wound structure formed by winding the positive electrode plate, separator, and negative electrode plate. The electrode assembly 1 has a main body part 11 and a tab part 12, which is arranged at least at one end of the main body part 11. As an example, as shown in FIG. 3, the two opposite ends of the main body part 11 are provided with tab parts 12. The two tab parts 12 are respectively the positive tab part and the negative tab part. The positive tab part can be the part of the positive electrode plate that is not coated with a positive electrode active substance layer, and the negative tab part can be the part of the negative electrode plate that is not coated with a negative electrode active substance layer.

In some embodiments, the battery cell 10 may also include an electrode terminal 3, which is arranged on the end cover 22 and is electrically connected to the electrode assembly 1 to output the electrical energy of the battery cell 10. In an embodiment where the shell 2 has two end covers 22, electrode terminals 3 can be provided on both end covers 22. The electrode terminal 3 on one end cover 22 is connected to the positive tab part through one current collector component 4, and the electrode terminal 3 on the other end cover 22 is connected to the negative tab part through another current collector component 4. As shown in FIG. 3, in an embodiment where the shell 2 has one end cover 22, the electrode terminal 3 on the end cover 22 can be connected to the positive tab part through the current collector component 4, and the bottom wall of the casing 21 is directly connected to the negative tab part, for example, by welding. The current collector component 4 can be metal conductor, such as copper, iron, aluminum, steel, aluminum alloy, etc.

In addition, a pressure relief mechanism can also be installed on the end cover 22 to release pressure via the pressure relief mechanism when the pressure or temperature inside the battery cell 10 reaches a threshold. The pressure relief mechanism can be an explosion-proof valve, explosion-proof disc, scratch, etc. installed on the end cover 22.

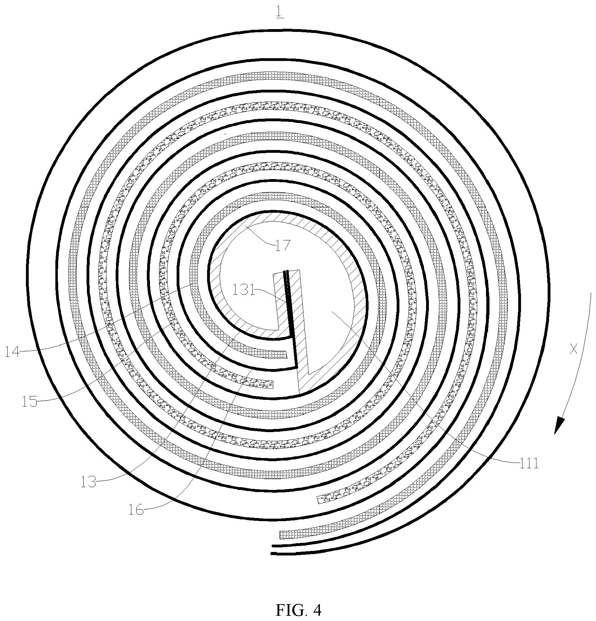

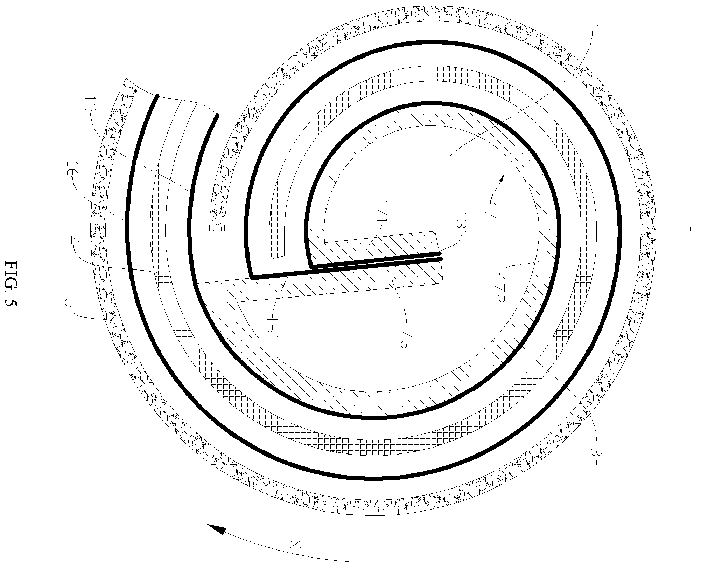

Referring to FIGS. 4 and 5, FIG. 4 is a structural schematic diagram of the electrode assembly 1 provided in some embodiments of the present disclosure; and FIG. 5 is a partial enlarged view of electrode assembly 1 shown in FIG. 4. The embodiment of the present disclosure provides an electrode assembly 1, which includes a first separator 13 and a first electrode plate 14 and a second electrode plate 15 with opposite polarity. The first electrode plate 14, the second electrode plate 15, and the first separator 13 are wound along the winding direction X to form an electrode assembly 1 with a first through hole 111. The first separator 13 includes a first extension section 131 extending into the first through hole 111; and the electrode assembly 1 further includes a reinforcer 17, wherein the reinforcer 17 is at least partially connected to the first extension section 131.

The first electrode plate 14 and the second electrode plate 15 have opposite polarity. It is possible that the first electrode plate 14 is the positive electrode plate, and the second electrode plate 15 is the negative electrode plate, or the first electrode plate 14 is the negative electrode plate, and the second electrode plate 15 is the positive electrode plate.

The first through hole 111 is a channel roughly located in the central area of electrode assembly 1 after the electrode assembly 1 is formed by winding, and the first through hole 111 is approximately a circular hole. The electrode assembly 1 can also include a second separator 16, and the first separator 13, the first electrode plate 14, the second separator 16, and the second electrode plate 15 can be arranged in sequence. The first separator 13, the first electrode plate 14, the second separator 16, and the second electrode plate 15 form the electrode assembly 1 along the winding direction X. The first separator 13 and the second separator 16 are used to insulate and isolate the first electrode plate 14 and the second electrode plate 15. The first through hole 111 can be formed in various ways. For example, the first separator 13 can be wound around the central area of the electrode assembly 1 to form the first through hole 111, or the second separator 16 can be wound around the central area of the electrode assembly 1 to form the first through hole 111.

During the winding and forming process of electrode assembly 1, the first separator 13, the first electrode plate 14, the second separator 16, and the second electrode plate 15 can be wound by roll core, thereby ultimately forming a wound electrode assembly. After removing the roll core, electrode assembly 1 forms a first through hole 111 at the position corresponding to the roll core.

The first extension section 131 is the part where the first separator 13 extends into the first through hole 111, and the first extension section 131 can roughly extend to the interior of the first through hole 111 in a radial direction of the first through hole 111. The above-mentioned roll core can be divided into two parts, namely the first winding body and the second winding body. The cross-section of the first winding body and the cross-section of the second winding body can both be semi-circular. During the winding and forming process, the first separator 13 is partially clamped between the first winding body and the second winding body. As the first winding body and the second winding body rotate as a whole, the first separator 13, the first electrode plate 14, the second separator 16 and the second electrode plate 15 are finally wound to form an electrode assembly 1. After the electrode assembly 1 is formed, the first separator 13 is located in the first through hole 111 and the part clamped by the first winding body and the second winding body is the first extension section 131.

The reinforcer 17 is a component that strengthens the first extension section 131. The reinforcer 17 can only be connected to the first extension section 131, thereby strengthening only the first extension section 131. The reinforcer 17 can also strengthen other parts. For example, the reinforcer 17 is also connected to the hole wall of the first through hole 111 to strengthen the hole wall of the first through hole 111.

The reinforcer 17 can be connected to the first extension section 131 in various ways. For example, the reinforcer 17 is formed by the atomic layer deposition method, and the formed reinforcer 17 is attached to the surface of the first extension section 131 to realize the connection between the reinforcer 17 and the first extension section 131. For another example, the reinforcer 17 is bonded to the first extension section 131 by bonding. In the embodiment where the reinforcer 17 is formed on the first extension section 131 by atomic layer deposition method, the coating layer can be inorganic oxides such as oxides of aluminum, zinc, titanium, silicon, zirconium, hafnium and magnesium, or various inorganic and organic polymer films. For example, the material of the coating layer can include at least one of aluminum oxide, silicon oxide, zirconia, hafnium oxide, titanium oxide, magnesium oxide, zinc oxide, boehmite, aluminium hydroxide, magnesium hydroxide, and lithium fluoride.

In the embodiment of the present disclosure, the first extension section 131 of the first separator 13 extends into the first through hole 111, and the reinforcer 17 is at least partially connected to the first extension section 131, such that the reinforcer 17 plays a strengthening role in the first extension section 131, thereby improving the deformation resistance of the first extension section 131, and making the first extension section 131 play a good supporting role in the first through hole 111. Therefore, the electrode assembly 1 is not easy to collapse into the first through hole 111, so as to reduce the risk that the electrode plate punctures the separator due to the collapse of electrode assembly 1 towards the first through hole 111 to lead to a short circuit inside the electrode assembly 1, thereby improving the safety of battery cell 10.

In addition, since the strengthened first extension section 131 can effectively reduce the risk of the electrode assembly 1 collapsing into the first through hole 111, the first through hole 111 can be unobstructed. When the battery cell 10 is subjected to thermal runaway, the emissions inside the battery cell 10 can flow to both ends through the first through hole 111, thereby ensuring that the emissions can be discharged in time through the pressure relief mechanism on the end cover 22.

In some embodiments, referring to FIG. 5 continuously, the first separator 13 further includes a first winding section 132, wherein the first winding section 132 is connected to the first extension section 131; and the first winding section 132 extends in the winding direction X from a connection position with the first extension section 131, so as to define the first through hole 111. The first extension section 131 is bent inwardly relative to the first winding section 132, and extends towards the interior of the first through hole 111 from the connection position between the first winding section 132 and the first extension section 131. The reinforcer 17 is at least partially connected to the first winding section 132.

The first winding section 132 is a part of the first separator 13 where the first through hole 111 is defined. It can be understood that the hole wall of the first through hole 111 is the inner surface of the first winding section 132. The first winding section 132 is wound by one circle in the winding direction X from the position connected to the first extension section 131, that is, the part where the separator is wound by one circle (360°) in the winding direction X from the first extension section 131 is the first winding section 132.

The first extension section 131 can extend to the inner surface of the first winding section 132, that is, one end of the first extension section 131 is connected to one end of the first winding section 132, and the other end of the first extension section 131 extends to the inner surface of the first winding section 132. As shown in FIG. 5, the first extension section 131 can also have a certain distance from the inner surface of the first winding section 132, that is, one end of the first extension section 131 is connected to one end of the first winding section 132, and the other end of the first extension section 131 and the inner surface of the first winding section 132 are arranged at an interval.

In this embodiment, the reinforcer 17 is at least partially connected to the first winding section 132, such that the reinforcer 17 plays a reinforcing role in the first winding section 132, thereby strengthening the hole wall of the first through hole 111. At the same time, the part of the reinforcer 17 connected to the first winding section 132 can support the hole wall, thereby further reducing the risk of electrode assembly 1 collapsing into the first through hole 111.

In some embodiments, continuing to refer to FIG. 5, the reinforcer 17 includes a first reinforcing part 171 and a second reinforcing part 172. The first reinforcing part 171 is connected to the first extension section 131, and the first reinforcing part 171 extends along the extension direction of the first extension section 131; and the second reinforcing part 172 is connected to the inner surface of the first winding section 132, and the second reinforcing part 172 is connected to the first reinforcing part 171 and extends along the winding direction X.

The first reinforcing part 171 is bent relative to the second reinforcing part 172 towards the first through hole 111. Along the extension direction of the first extension section 131, one end of the first reinforcing part 171 that is away from the second reinforcing part 172 can extend to one end of the first extension section 131 that is away from the first winding section 132; and one end of the first reinforcing part 171 that is away from the second reinforcing part 172 may not extend to the end of the first extension section 131 that is away from the first winding section 132. Along the winding direction X, one end of the second reinforcing part 172 that is away from the first reinforcing part 171 can extend to one end of the first winding section 132 that is away from the first extension section 131, that is, the second reinforcing part 172 can be wound by one circle along the winding direction X; and one end of the second reinforcing part 172 that is away from the first reinforcing part 171 may not extend to the end of the first winding section 132 that is away from the first extension section 131, for example, the second reinforcing part 172 is wound by half a turn in the winding direction X.

In this embodiment, the first reinforcing part 171 is connected to the first extension section 131 and extends along the extension direction of the first extension section 131, such that the first reinforcing part 171 plays a reinforcing role in the first extension section 131, so as to enhance the support capacity of the first extension section 131. The second reinforcing part 172 is connected to the inner surface of the first winding section 132 and extends along the winding direction X, such that the second reinforcing part 172 plays a reinforcing role in the first winding section 132, so as to achieve reinforcement for the hole wall of the first through hole 111.

In some embodiments, continuing to refer to FIG. 5, the electrode assembly 1 further includes a second separator 16, wherein the first separator 13, the first electrode plate 14, the second separator 16, and the second electrode plate 15 are wound along the winding direction X to form the electrode assembly 1 with the first through hole 111, wherein the second separator 16 includes a second extension section 161, the second extension section 161 extends towards the interior of the first through hole 111 and is stacked with the first extension section 131, and the first reinforcing part 171 is connected to the surface of the first extension section 131 facing away from the second extension section 161. The reinforcer 17 further includes a third reinforcing part 173, wherein the third reinforcing part 173 is connected to the surface of the second extension section 161 facing away from the first extension section 131, and the third reinforcing part 173 extends along the extension direction of the second extension section 161.

The second extension section 161 is a part of the second separator 16 that extends into the first through hole 111 and is stacked with the first extension section 131. During the winding and forming process for the electrode assembly 1 through the roll core, both the first separator 13 and the second separator 16 are partially clamped between the first winding body and the second winding body. As the first winding body and the second winding body rotate as a whole, the first separator 13, the first electrode plate 14, the second separator 16 and the second electrode plate 15 are finally wound to form an electrode assembly 1. After the electrode assembly 1 is formed, the part of the first separator 13 located in the first through hole 111 and clamped by the first and second winding bodies is the first extension section 131, and the part of the second separator 16 located in the second through hole 121 and clamped by the first and second winding bodies is the second extension section 161.

The second extension section 161 can extend to the inner surface of the first winding section 132 or have a certain distance from the inner surface of the first winding section 132.

The third reinforcing part 173 and the second reinforcing part 172 can be connected or not. If the third reinforcing part 173 is connected to the second reinforcing part 172, the first reinforcing part 171, the second reinforcing part 172, and the third reinforcing part 173 can be in an integrally formed structure. If the third reinforcing part 173 is not connected to the second reinforcing part 172, the third reinforcing part 173 and the second reinforcing part 172 are independent of each other.

In this embodiment, the second extension section 161 extends towards the interior of the first through hole 111 and is stacked with the first extension section 131, so as to make the first extension section 131 and the second extension section 161 thicker overall. The third reinforcing part 173 and first reinforcing part 171 respectively strengthen the first extension section 131 and second extension section 161, thereby enhancing the overall support capacity of the first extension section 131 and second extension section 161, and further reducing the risk of electrode assembly 1 collapsing into the first through hole 111.

In some embodiments, continuing to refer to FIG. 5, the first reinforcing part 171 completely covers the surface of the first extension section 131 facing away from the second extension section 161; and/or the third reinforcing part 173 completely covers the surface of the second extension section 161 facing away from the first extension section 131.

The first reinforcing part 171 completely covers the surface of the first extension section 131 facing away from the second extension section 161, so as to increase the area of the first reinforcing part 171 covering the first extension section 131 and further enhance the deformation resistance of the first extension section 131. The third reinforcing part 173 completely covers the surface of the second extension section 161 facing away from the first extension section 131, so as to increase the area of the third reinforcing part 173 covering the second extension section 161 and further enhance the deformation resistance of the second extension section 161.

In some embodiments, continuing to refer to FIG. 5, along the winding direction X, the third reinforcing part 173 and the first reinforcing part 171 are respectively connected at two ends of the second reinforcing part 172.

As an example, in FIG. 5, both the first extension section 131 and the second extension section 161 have a certain distance from the inner surface of the first winding section 132. One end of the first extension section 131 located in the first through hole 111 is the winding starting end of the first separator 13, and one end of the second extension section 161 located in the second through hole 121 is the winding starting end of the second separator 16.

In this embodiment, the third reinforcing part 173 and the first reinforcing part 171 are respectively connected to the two ends of the second reinforcing part 172 in the winding direction X. On the one hand, the second reinforcing part 172 and the first winding section 132 can have a larger overlapping region, and the second reinforcing part 172 can strengthen the entire circumference of the hole wall of the first through hole 111. On the other hand, the first reinforcing part 171, the second reinforcing part 172, and the third reinforcing part 173 have good integrity and can better strengthen the first extension section 131, the first winding section 132, and the second extension section 161.

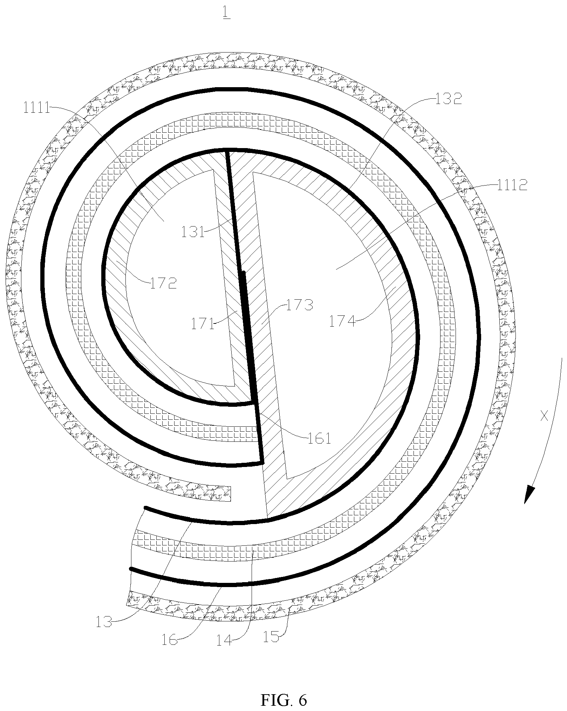

In some embodiments, referring to FIG. 6, FIG. 6 is a partial enlarged view of the electrode assembly 1 provided in some other embodiments of the present disclosure. The first through hole 111 includes a first half-hole region 1111 and a second half-hole region 1112 separated from each other. The first reinforcing part 171 and the second reinforcing part 172 are located in the first half-hole region 1111, and the third reinforcing part 173 is located in the second half-hole region 1112.

The first extension section 131 and/or the second extension section 161 can extend to the inner surface of the first winding section 132, thereby dividing the first through hole 111 into two parts, with one part being the first half-hole region 1111 and the other part being the second half-hole region 1112. The first half-hole region 1111 can also be a region formed by winding a part of the first separator 13 inside the first through hole 111, and the second half-hole region 1112 can also be a region formed by winding a part of the second separator 16 inside the first through hole 111.

In the embodiment of winding and forming the electrode assembly 1 through the roll core, the area corresponding to the first winding body in the first through hole 111 is the first half-hole region 1111, and the area corresponding to the second winding body in the second through hole 121 is the second half-hole region 1112. It is understandable that during the winding and forming process of electrode assembly 1, the first winding body and the second winding body are located in the first half-hole region 1111 and the second half-hole region 1112, respectively.

In this embodiment, the first reinforcing part 171 and the second reinforcing part 172 are located within the first half-hole region 1111, such that the first reinforcing part 171 and second reinforcing part 172 play a strengthening role in the first half-hole region 1111, thereby reducing the risk of electrode assembly 1 collapsing towards the first half-hole region 1111. The third reinforcing part 173 is located in the second half-hole region 1112, and plays a strengthening role in the second half-hole region 1112, thereby reducing the risk of electrode assembly 1 collapsing towards the second half-hole region 1112.

In some embodiments, referring to FIG. 6, the first reinforcing part 171 and the second reinforcing part 172 are connected end-to-end to form a first closed unit 17a, wherein the first closed unit 17a is located within the first half-hole region 1111.

The first closed unit 17a is of a hollow structure. As an example, the space inside the first closed unit 17a is semi-circular.

In this embodiment, the first reinforcing part 171 and the second reinforcing part 172 are connected end-to-end to form a first closed unit 17a. The first closed unit 17a is of a hollow structure with good deformation resistance, thereby providing good support for the hole wall of the first half-hole region 1111, and effectively reducing the risk of electrode assembly 1 collapsing into the first half-hole region 1111.

In addition, since the first closed unit 17a is of a hollow structure, when the battery cell 10 is subjected to thermal runaway, the space inside the first closed unit 17a can be used as a flow channel for emissions inside the battery cell 10, so as to ensure that emissions inside the battery cell 10 can be discharged in time.

In some embodiments, referring to FIG. 6 continuously, the first extension section 131 extends to the inner surface of the first winding section 132, and the first extension section 131 and the first winding section 132 jointly define the first half-hole region 1111.

As an example, in FIG. 6, the second extension section 161 does not extend to the inner surface of the first winding section 132. The second extension section 161, the first extension section 131, and the first winding section 132 jointly define the second half-hole region 1112. Understandably, a part of the first winding section 132 is used to define the first half-hole region 1111 with the first extension section 131, and another part of the first winding section 132 is used to define the second half-hole region 1112 with the second extension section 161 and a part of the first extension section 131.

In this embodiment, the first extension section 131 extends to the inner surface of the first winding section 132, thereby making the first extension section 131 more stable in the first through hole 111 and providing better support for the first through hole 111.

It should be noted that in other embodiments, in the case where the first extension section 131 does not extend to the inner surface of the first winding section 132, the first reinforcing part 171 and the second reinforcing part 172 can also be connected end-to-end to form the first closed unit 17a.

In some embodiments, referring to FIG. 6 continuously, the reinforcer 17 further includes a fourth reinforcing part 174, wherein the fourth reinforcing part 174 is connected to the inner surface of the first winding section 132 and extends along the winding direction X, and the third reinforcing part 173 and the fourth reinforcing part 174 are connected end-to-end to form a second closed unit 17b, wherein the second closed unit 17b is located in the second half-hole region 1112.

The second closed unit 17b is of a hollow structure, and the second closed unit 17b and the first closed unit 17a are components independent of each other. As an example, the space inside the second closed unit 17b is semi-circular.

In this embodiment, the third reinforcing part 173 and the fourth reinforcing part 174 are connected end-to-end to form the second closed unit 17b. The second closed unit 17b is of a hollow structure with good deformation resistance, thereby providing good support for the hole wall of the second half-hole region 1112 and effectively reducing the risk of electrode assembly 1 collapsing towards the second half-hole region 1112.

In addition, since the second closed unit 17b is of a hollow structure, when the battery cell 10 is subjected to thermal runaway, the space inside the second closed unit 17b can be used as a flow channel for emissions inside the battery cell 10, so as to ensure that emissions inside the battery cell 10 can be discharged in time.

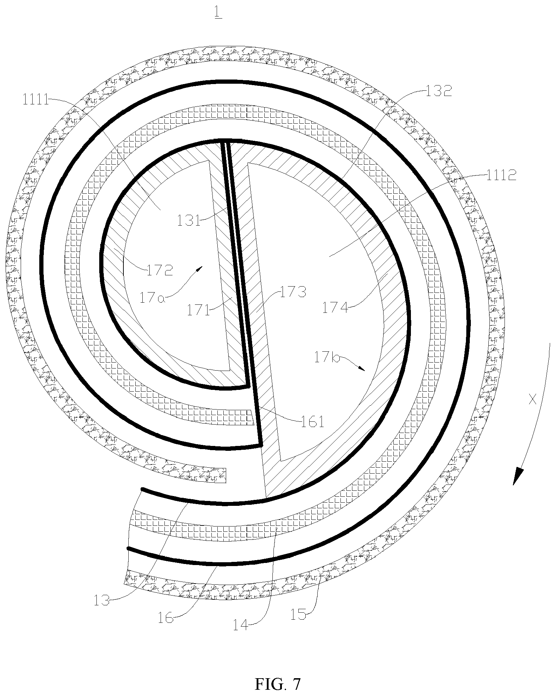

In some embodiments, referring to FIG. 7, FIG. 7 is a partial enlarged view of the electrode assembly 1 provided in some other embodiments of the present disclosure. The second extension section 161 extends to the inner surface of the first winding section 132, and the second extension section 161 and the first winding section 132 jointly define the second half-hole region 1112.

As an example, a part of the first winding section 132 and the first extension section 131 jointly define the first half-hole region 1111, and another part of the first winding section 132 and the second extension section 161 jointly define the second half-hole region 1112.

In this embodiment, the second extension section 161 extends to the inner surface of the first winding section 132, thereby making the second extension section 161 more stable in the first through hole 111 and providing better support for the first through hole 111.

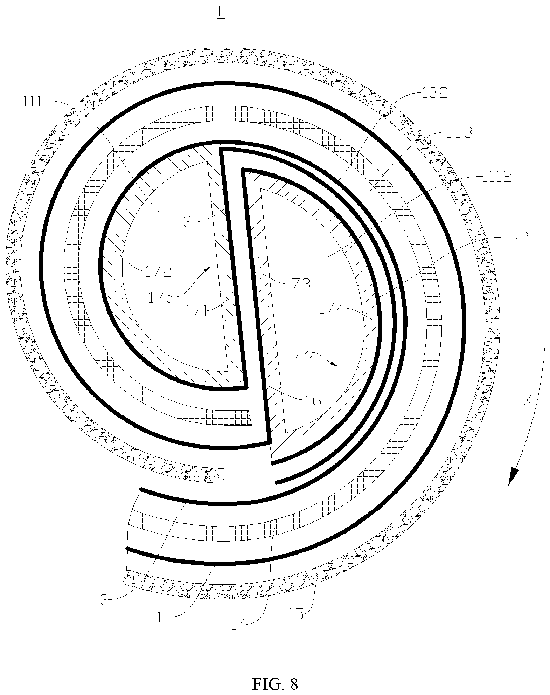

In some embodiments, referring to FIG. 8, FIG. 8 is a partial enlarged view of the electrode assembly 1 provided in some other embodiments of the present disclosure. The second separator 16 further includes a second winding section 162, wherein the second winding section 162 is bent relative to the second extension section 161; the second winding section 162 extends along the winding direction X from the second extension section 161; the second winding section 162 is located on the inner side of the first winding section 132 and is stacked with the first winding section 132; and the second extension section 161 and the second winding section 162 jointly define the second half-hole region 1112. The second half-hole region 1112 is defined by the second extension section 161 and the second winding section 162.

Understandably, the second half region is the area formed by winding a part (the second extension section 161 and the second winding section 162) of the second separator 16 within the first through hole 111. The end of the second winding section 162 away from the second extension section 161 is the starting end for winding the second separator 16.

In this embodiment, the second separator 16 has a second winding section 162 stacked with the first winding section 132. The second winding section 162 and the second extension section 161 jointly define the second half-hole region 1112. The second closed unit 17b located within the second half-hole region 1112 strengthens the second winding section 162 to achieve stable support for the first winding section 132, thereby reducing the risk of electrode assembly 1 collapsing into the first through hole 111.

In some embodiments, continuing to refer to FIG. 8, the first separator 13 further includes a third winding section 133, wherein the third winding section 133 is connected to one end of the first extension section 131 away from the first winding section 132, and the third winding section 133 extends in the winding direction X from the first extension section 131. The first winding section 132, the third winding section 133, and the second winding section 162 are stacked in sequence from the outside to the inside.

The end where the first extension section 131 is connected to the first winding section 132 is the connecting end, and the end where the first extension section 131 is away from the first winding section 132 is the end of the first extension section 131 opposite to the connecting end.

The third winding section 133 is bent relative to the first extension section 131, and is located outside the first half-hole region 1111 jointly defined by the first extension section 131 and the first winding section 132. The end of the third winding section 133 away from the first extension section 131 is the starting end for winding the first separator 13.

In this embodiment, the first winding section 132, the third winding section 133, and the second winding section 162 are sequentially stacked from the outside to the inside, such that the third winding section 133 is limited between the first winding section 132 and the second winding section 162, thereby improving the stability of the first extension section 131.

It should be noted that in FIGS. 4-8, in order to have a clearer structure and facilitate the differentiation of various parts, the gaps between the separators and the gaps between the separator and the electrode plate have been enlarged and exaggerated. Actually, the gap between the separators (such as, in FIG. 8, between the first winding section 132 and the third winding section 133, between the third winding section 133 and the second winding section 162, etc.), or between the separator and the electrode plate (such as, in FIG. 8, between the second electrode plate 15 and the second separator 16, between the first separator 13 and the first electrode plate 14, between the first electrode plate 14 and the second separator 16, etc.) is small or does not exi st.

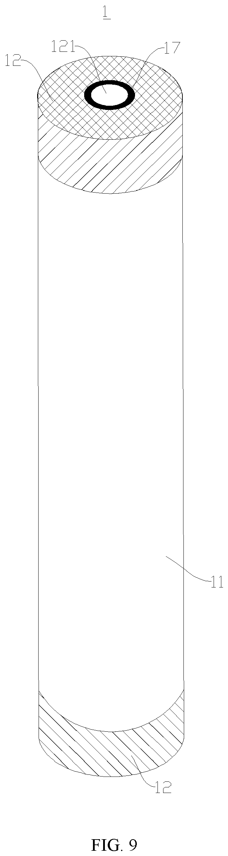

In some embodiments, referring to FIG. 9, FIG. 9 is an axonometric drawing of the electrode assembly 1 provided in some embodiments of the present disclosure. The electrode assembly 1 has a main body part 11 and a tab part 12, wherein the tab part 12 is provided on at least one end of the main body part 11; the first through hole 111 is formed inside the main body part 11 (not shown in FIG. 9); and the second through hole 121 is formed inside the tab part 12, wherein the second through hole 121 is communicated with the first through hole 111. The reinforcer 17 partially extends into the first through hole 111 and is connected to the tab part 12.

The second through hole 121 is provided inside the tab part 12, and the tab part 12 is in a circular structure. As an example, the main body part 11 is roughly cylindrical, and the tab part 12 is coaxial with the main body part 11.

As an example, the part of the reinforcer 17 extending into the first through hole 111 is connected to the part of the reinforcer 17 connected to the first separator 13 and/or the second separator 16.

As an example, in FIG. 9, the two opposite ends of the main body part 11 are provided with tab parts 12. The two tab parts 12 are respectively the positive tab part and the negative tab part.

In this embodiment, the reinforcer 17 extends into the first through hole 111 and is connected to the tab part, such that the reinforcer 17 can be fixed to tab, which further strengthens the separator at the first through hole 111, and makes it more difficult for the separator to move. Therefore, the risk of excessive spacing between the first electrode plate 14 and the second electrode plate 15 due to the movement of the separator with the reinforcer 17 can be reduced effectively, thereby effectively improving the safety of the battery cell 10.

In some embodiments, the thickness of reinforcer 17 is 0.01-1000 µM.

The thickness of reinforcer 17 is the thickness of reinforcer 17 protruding from the surface of the separator. In the embodiment where the reinforcer 17 is arranged on the first separator 13, for example, the first reinforcing part 171 of the reinforcer 17 is connected to the first extension section 131 of the first separator 13, the second reinforcing part 172 of the reinforcer 17 is connected to the first winding section 132 of the first separator 13, and the first reinforcing part 171 and the second reinforcing part 172 of the reinforcer 17 both have a thickness of 0.01-1000 µM. In the embodiment where one part of the reinforcer 17 is arranged on the first separator 13 and the other part is arranged on the second separator 16, for example, the first reinforcing part 171 and the second reinforcing part 172 of the reinforcer 17 are connected end-to-end to form the first closed unit 17a, and the third reinforcing part 173 and the fourth reinforcing part 174 of the reinforcer 17 are connected end-to-end to form the second closed unit 17b; and the thickness of the reinforcer 17 is the wall thickness of the first closed unit 17a and the second closed unit 17b, and the wall thickness of the first closed unit 17a and the wall thickness of the second closed unit 17b are both 0.01-1000 µM.

Furthermore, the thickness of reinforcer 17 is 0.1-300 µM.

In some embodiments, the porosity of reinforcer 17 is not greater than 10%.

The reinforcer 17 can be of a porous structure or a dense and nonporous structure.

In this embodiment, the porosity of reinforcer 17 is set within a reasonable range, such that the reinforcer 17 has good reinforcement effect and good deformation resistance.

In some embodiments, the reinforcer 17 is made of insulating material.

Furthermore, the reinforcer 17 is an inorganic reinforcer or a composite reinforcer containing inorganic material.

The material of inorganic reinforcer is inorganic, and composite reinforcer can be formed through inorganic-organic hybridization, organic-inorganic hybridization, and other methods.

The embodiment of the present disclosure provides a battery unit 10, which includes a shell 2 and an electrode assembly 1 provided by any of the above embodiments. The electrode assembly 1 is accommodated within the shell 2.

The embodiment of the present disclosure provides a battery 100, which includes a box 20 and a battery cell 10 provided by any of the above embodiments. The battery cell 10 is accommodated within the box 20.

The embodiment of the present disclosure also provides an electrical equipment, including a battery 100 provided by any of the above embodiments.

It should be noted that in the absence of conflicts, the embodiments and the features in the embodiments in the present disclosure can be combined with each other.

The above embodiment is only used to illustrate the technical solution of the present disclosure and is not intended to limit it. For those skilled in the art, the present disclosure may undergo various modifications and variations. Any modifications, equivalent replacements, improvements, etc. made within the spirit and principles of the present disclosure shall be included within the scope of protection of the present disclosure.

## Claims

1. An electrode assembly, comprising a first separator and a first electrode plate and a second electrode plate with opposite polarity, wherein the first electrode plate, the second electrode plate, and the first separator are wound along a winding direction to form the electrode assembly with a first through hole; and
the first separator comprises a first extension section extending into the first through hole;
and the electrode assembly further comprises a reinforcer, wherein the reinforcer is at least partially connected to the first extension section.

2. The electrode assembly according to claim 1, wherein the first separator further comprises a first winding section, wherein the first winding section is connected to the first extension section; and the first winding section extends in the winding direction from a connection position with the first extension section, so as to define the first through hole;
the first extension section is bent inwardly relative to the first winding section, and extends towards an interior of the first through hole from the connection position; and
the reinforcer is at least partially connected to the first winding section.

3. The electrode assembly according to claim 2, wherein the reinforcer comprises:
a first reinforcing part, connected to the first extension section and extending along an extension direction of the first extension section; and
a second reinforcing part, connected to an inner surface of the first winding section, wherein the second reinforcing part is connected to the first reinforcing part and extends along the winding direction.

4. The electrode assembly according to claim 3, wherein the electrode assembly further comprises a second separator, wherein the first separator, the first electrode plate, the second separator, and the second electrode plate are wound along the winding direction to form the electrode assembly with the first through hole, wherein the second separator comprises a second extension section, the second extension section extends towards the interior of the first through hole and is stacked with the first extension section, and the first reinforcing part is connected to a surface of the first extension section facing away from the second extension section; and
the reinforcer further comprises a third reinforcing part, wherein the third reinforcing part is connected to a surface of the second extension section facing away from the first extension section, and the third reinforcing part extends along an extension direction of the second extension section.

5. The electrode assembly according to claim 4, wherein the first reinforcing part completely covers the surface of the first extension section facing away from the second extension section; and/or
the third reinforcing part completely covers the surface of the second extension section facing away from the first extension section.

6. The electrode assembly according to claim 4 or 5, wherein the third reinforcing part and the first reinforcing part are respectively connected at two ends of the second reinforcing part along the winding direction.

7. The electrode assembly according to claim 4 or 5, wherein the first through hole comprises a first half-hole region and a second half-hole region separated from each other; and
the first reinforcing part and the second reinforcing part are located in the first half-hole region, and the third reinforcing part is located in the second half-hole region.

8. The electrode assembly according to claim 7, wherein the first reinforcing part and the second reinforcing part are connected end-to-end to form a first closed unit, wherein the first closed unit is located within the first half-hole region.

9. The electrode assembly according to claim 7 or 8, wherein the first extension section extends to the inner surface of the first winding section, and the first extension section and the first winding section jointly define the first half-hole region.

10. The electrode assembly according to any one of claims 7-9, wherein the reinforcer further comprises a fourth reinforcing part, wherein the fourth reinforcing part is connected to the inner surface of the first winding section and extends along the winding direction, and the third reinforcing part and the fourth reinforcing part are connected end-to-end to form a second closed unit, wherein the second closed unit is located in the second half-hole region.

11. The electrode assembly according to claim 10, wherein the second extension section extends to the inner surface of the first winding section, and the second extension section and the first winding section jointly define the second half-hole region.

12. The electrode assembly according to claim 10 or 11, wherein the second separator further comprises a second winding section, wherein the second winding section is bent relative to the second extension section; the second winding section extends along the winding direction from the second extension section; the second winding section is located on an inner side of the first winding section and stacked with the first winding section; and the second extension section and the second winding section jointly define the second half-hole region.

13. The electrode assembly according to claim 12, wherein the first separator further comprises a third winding section, wherein the third winding section is connected to one end of the first extension section away from the first winding section, and the third winding section extends in the winding direction from the first extension section,
wherein the first winding section, the third winding section, and the second winding section are stacked in sequence from outside to inside.

14. The electrode assembly according to any one of claims 3-5, wherein the first reinforcing part and the second reinforcing part are connected end-to-end to form a first closed unit.

15. The electrode assembly according to claim 14, wherein the first extension section extends to the inner surface of the first winding section, and the first extension section and the first winding section jointly define a first half-hole region, wherein the first closed unit is located in the first half-hole region.

16. The electrode assembly according to any one of claims 1-15, wherein the electrode assembly has a main body part and a tab part, wherein the tab part is provided on at least one end of the main body part; the first through hole is formed inside the main body part; and a second through hole is formed inside the tab part, wherein the second through hole is communicated with the first through hole; and
the reinforcer partially extends into the first through hole and is connected to the tab part.

17. The electrode assembly according to any one of claims 1-16, wherein the reinforcer has a thickness of 0.01-1000 µM.

18. The electrode assembly according to claim 17, wherein the reinforcer has a thickness of 0.1-300 µM.

19. The electrode assembly according to any one of claims 1-18, wherein a porosity of the reinforcer is not greater than 10%.

20. The electrode assembly according to any one of claims 1-19, wherein the reinforcer is made of an insulating material.

21. The electrode assembly according to any one of claims 1-20, wherein the reinforcer is an inorganic reinforcer or a composite reinforcer containing an inorganic material.

22. A battery cell, comprising:
a shell; and
the electrode assembly according to any one of claims 1-21, wherein the electrode assembly is accommodated in the shell.

23. A battery, comprising:
a box; and
the battery cell according to claim 22, wherein the battery cell is accommodated in the box.

24. An electrical equipment, comprising the battery according to claim 23.
